# EUROPEAN PATENT SPECIFICATION

(11) **EP 3 511 789 B1**
(45) Date of publication and mention of the grant of the patent: **22.07.2020**
(21) Application number: 19151743.2
(22) Date of filing: 15.01.2019
(51) Int. Cl.: G05B 19/409

(54) **CUTTING SYSTEM**
SCHNEIDSYSTEM
SYSTÈME DE COUPE

(30) Priority: 15.01.2018 JP 2018004100
(43) Date of publication of application: 17.07.2019
(73) Proprietor: DGSHAPE Corporation, Hamamatsu-shi, Shizuoka 431-2103 (JP)
(72) Inventor: ASAHINA, Yoshimitsu, Hamamatsu-shi, Shizuoka 431-2103 (JP); SUZUKI, Akihiro, Hamamatsu-shi, Shizuoka 431-2103 (JP); AKIMOTO, Daisuke, Hamamatsu-shi, Shizuoka 431-2103 (JP)
(74) Representative: Grünecker Patent- und Rechtsanwälte PartG mbB

(56) References cited:
- DE-A1-102014 209 367

## Description

### [TECHNICAL FIELD]

The present invention relates to a cutting system that includes a cutting machine for producing a dental prosthesis that has a shape of a dental crown.

### [BACKGROUND ART]

Conventional cutting machines are known in the art for machining a workpiece, such as a dental ceramic material or a dental resin material, into an intended shape to produce a dental prosthesis (referred to also as an artificial tooth, an artificial dental crown, etc.). A cutting machine includes a machining tool to perform a process such as cutting and polishing on a workpiece by using the machining tool, thereby producing a dental prosthesis.

As a cutting machine of this type, Patent Literature 1, for example, discloses a cutting machine having an automatic cutter changing function (Auto Tool Changer: ATC) of automatically switching between a plurality of machining tools having different cutter shapes in order to automatically and successively perform various processes in a single operation.

### [CITATION LIST]

### [Patent Literature]

[Patent Literature 1] JP 2017-094437 A

### [SUMMARY OF INVENTION]

### [TECHNICAL PROBLEM]

In recent years, cutting machines have been developed that have the function of automatically replacing workpieces to be machined so as to successively produce dental prostheses. With such a cutting machine, a plurality of dental prostheses are produced successively by using a plurality of machining tools and a plurality of workpieces.

Now, when machining workpieces by using a first cutting machine having the function of automatically replacing workpieces and a second cutting machine not having the function of automatically replacing workpieces, for example, conventional techniques used first software for the first cutting machine and second software for the second cutting machine. It was thus necessary to launch different software for different machine models, and the display space of the display device tended to look complicated. In some cases, different software had similar display screens, and it was possible for the operator to operate a wrong model that is different from the intended model.

The present invention has been made in view of such a problem, and an object thereof is to provide a cutting system with which the operator can easily and reliably operate different cutting machines.

### [MEANS FOR SOLVING THE PROBLEM]

A cutting system according to the present invention includes: a first cutting machine that machines a workpiece to produce a dental prosthesis; a second cutting machine that machines a workpiece to produce a dental prosthesis; a display device that displays first model information of the first cutting machine and second model information of the second cutting machine; and a controller that is connected to the first cutting machine and the second cutting machine and transmits job data for the dental prosthesis to the first cutting machine and the second cutting machine, wherein the controller includes: a first display controller that displays a basic screen on a display device, the basic screen including a common area where a first screen showing some of common items that are common between the first model information and the second model information is displayed, and a specific area where a second screen showing some other ones of the common items that are common between the first model information and the second model information or a second screen showing the other ones of the common items and specific items included in one of the first model information and the second model information is displayed; a second display controller that displays the first screen in the common area; a switcher that switches between displaying the first model information and displaying the second model information on the basic screen; and a third display controller that displays the second screen associated with the first cutting machine in the specific area when display is switched to the first model information, and that displays the second screen associated with the second cutting machine in the specific area when display is switched to the second model information.

With the cutting system of the present invention, the switcher switches between displaying the first model information and displaying the second model information on the basic screen displayed on the display device. Thus, it is possible to switch between a plurality of model information to be displayed, and it is possible to prevent the display space of the display device from being complicated, as compared with a case where the model information are displayed at once. Since information for each of the cutting machines is displayed on the basic screen, it is possible to prevent a wrong cutting machine from being operated in error. Moreover, the second display controller displays, in the common area of the basic screen displayed on the display device, the first screen showing some of the common items that are common between the first model information of the first cutting machine and the second model information of the second cutting machine. Thus, information that are common between the cutting machines are displayed in the same common area, thereby reducing the management burden on the operator. Furthermore, the third display controller displays, in the specific area of the basic screen displayed on the display device, the second screen that is associated with the first cutting machine or the second screen that is associated with the second cutting machine. Thus, since the second screens that are each associated with a group of cutting machines are displayed in the specific area, the operator can easily see the second screen displayed in the specific area so as to easily check the characteristic of the cutting machine.

### [ADVANTAGEOUS EFFECTS OF INVENTION]

According to the present invention, it is possible to provide a cutting system with which the operator can easily and reliably operate different cutting machines.

### [BRIEF DESCRIPTION OF DRAWINGS]

FIG. **1** is a schematic view showing an exemplary configuration of a cutting system according to one embodiment.
FIG. **2** is a perspective view of a first cutting machine according to the embodiment.
FIG. **3** is a plan view of a workpiece to which an adapter is attached according to the embodiment.
FIG. **4** is a perspective view of a first cutting machine according to the embodiment, where the door of a carrier device is open.
FIG. **5** is a plan view of a carrier according to the embodiment, where a workpiece is clamped by the carrier.
FIG. **6** is a front view of a machining device according to the embodiment.
FIG. **7** is a perspective view of a tool magazine according to the embodiment.
FIG. **8** is a perspective view of a rotation support member and a clamp according to the embodiment.
FIG. **9** is a block diagram of a control terminal according to the embodiment.
FIG. **10** shows an exemplary basic screen displayed on a display device according to the embodiment, where first model information of the first cutting machine is displayed.
FIG. **11** shows an exemplary basic screen displayed on the display device according to the embodiment, where second model information of a second cutting machine is displayed.
FIG. **12** shows a part of an exemplary basic screen displayed on the display device according to the embodiment, where a list of cutting machines that are being controlled is displayed.
FIG. **13** shows an exemplary basic screen displayed on a display device according to another embodiment, where first model information of the first cutting machine is displayed.
FIG. **14** shows an exemplary basic screen displayed on the display device according to the other embodiment, where second model information of the second cutting machine is displayed.
FIG. **15** schematically shows an exemplary setting screen according to the other embodiment.

### [DESCRIPTION OF EMBODIMENTS]

A cutting system according to one embodiment of the present invention will now be described with reference to the drawings. Note that it is understood that the embodiment illustrated herein is not intended to limit the scope of the present invention. Members and portions of like functions are denoted by like reference signs, and redundant descriptions will be omitted or shortened as necessary.

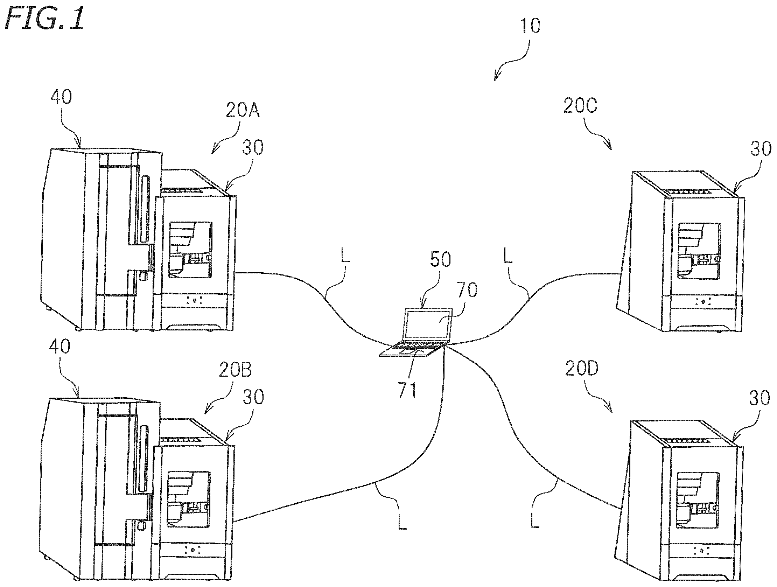

As shown in FIG. **1**, a cutting system **10** (which may be referred to as the "system **10**" as appropriate) includes first cutting machines **20A** and **20B**, second cutting machines **20C** and **20D**, and a control terminal **50.** Hereinafter, the first cutting machines **20A** and **20B** and the second cutting machines **20C** and **20D** may be referred to as the cutting machines **20A** to **20D** as appropriate. The cutting machines **20A** to **20D** are connected to the control terminal **50** via lines **L** so as to enable wired communication. Note that the cutting machines **20A** to **20D** and the control terminal **50** may communicate with each other wirelessly. While four cutting machines **20A** to **20D** are connected to one control terminal **50** in the present embodiment, two, three or five or more cutting machines may be connected to one control terminal **50.**

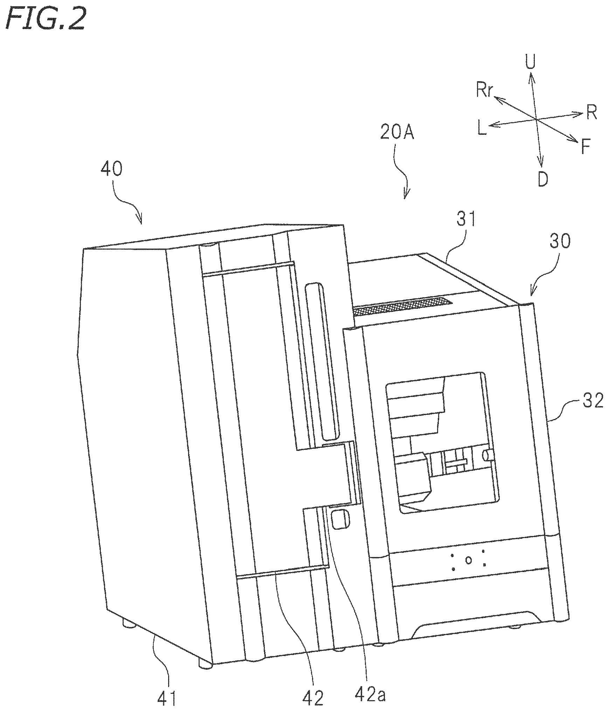

The configuration of the cutting machines **20A** to **20D** will now be described in detail. Note that the first cutting machines **20A** and **20B** and the second cutting machines **20C** and **20D** commonly include a machining device **30** to be described below. The first cutting machines **20A** and **20B** also include a carrier device **40** to be described below. The second cutting machines **20C** and **20D** do not include the carrier device **40.** The first cutting machine **20A** will be described hereinafter. For the first cutting machine **20B** and the second cutting machines **20C** and **20D**, redundant description with the first cutting machine **20A** will be omitted. FIG. **2** is a perspective view of the first cutting machine **20A.** In the following description, as the first cutting machine **20A** is seen from the front side, the direction away from the first cutting machine **20A** will be referred to as "front", and the direction toward the first cutting machine **20A** as "rear". The terms "left", "right", "up" and "down" refer to these directions as the first cutting machine **20A** is seen from the front side. The designations F, Rr, L, R, U and D, as used in the figures, refer to front, rear, left, right, up and down, respectively. In the present embodiment, where the X axis, the Y axis and the Z axis are orthogonal to each other, the first cutting machine **20A** is placed on a plane that is defined by the X axis and the Y axis. Herein, the X axis is an axis that extends in the front-rear direction. The Y axis is an axis that extends in the left-right direction. The Z axis is an axis that extends in the up-down direction. The designations θ_{X}, θ_{Y} and θ_{Z} denote rotation directions about the X axis, the Y axis and the Z axis, respectively. Note however that these directions are defined merely for the purpose of discussion, and do not in any way limit how the first cutting machine **20A** is placed or limit the scope of the present invention.

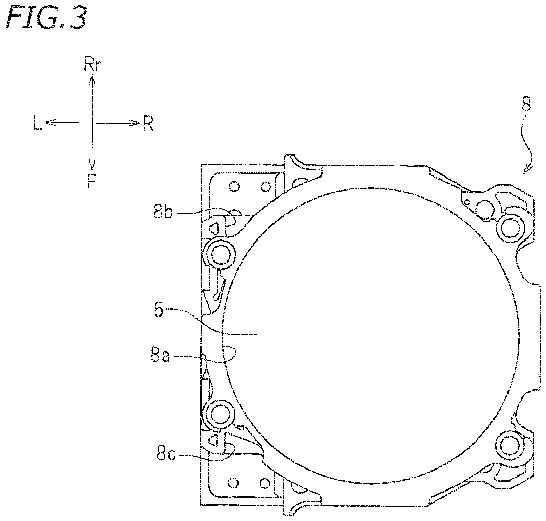

The first cutting machines **20A** and **20B** are each a device that accommodates a plurality of workpieces **5** (see FIG. **3**), selects one of the workpieces **5** accommodated therein, and cuts the selected workpiece **5.** The second cutting machines **20C** and **20D** are each a device that cuts one workpiece **5** accommodated therein. For example, the cutting machines **20A** to **20D** each machine a workpiece **5** to produce a dental prosthesis. The shape of the workpiece **5** is a circular plate shape, for example. The workpiece **5** is formed from any of various materials such as zirconia, wax, polymethylmethacrylate resin (PMMA), hybrid resin, PEEK (polyetheretherketone resin) and gypsum. When zirconia is used as the material of a workpiece **5**, a semi-sintered zirconia is used, for example. Note however that there is no particular limitation on the shape and the material of the workpiece **5.**

As shown in FIG. **3**, in the present embodiment, an adapter **8** (referred to also as a holder) is attached to the workpiece **5.** The workpiece **5**, with the adapter **8** attached thereto, is accommodated in and machined by the cutting machines **20A** to **20D.** Herein, an insertion hole **8a** is formed in the central portion of the adapter **8.** The workpiece **5** is attached to the adapter **8** as the workpiece **5** is inserted into the insertion hole **8a.** In the following description, a workpiece **5** refers to a workpiece **5** that is attached to the adapter **8.** A workpiece **5** includes, beside the workpiece **5**, the adapter **8** attached to the workpiece **5.**

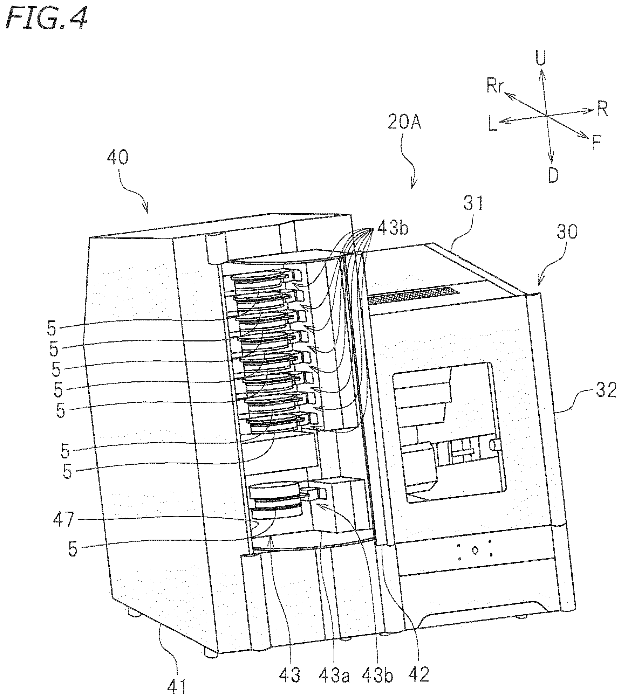

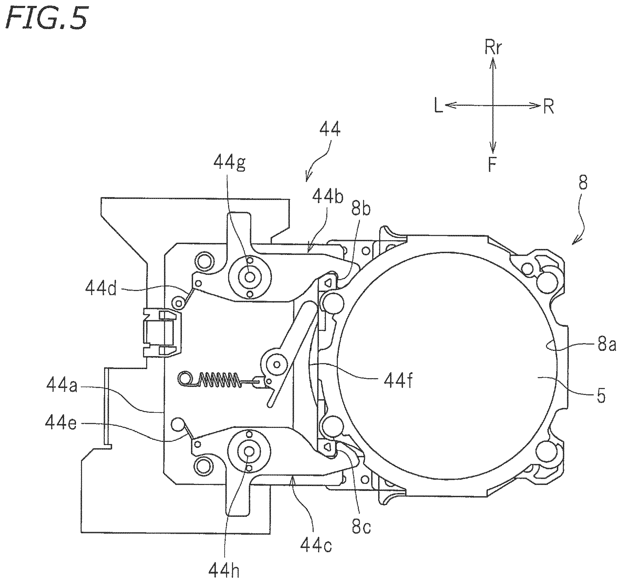

As shown in FIG. **2**, the first cutting machine **20A** includes the machining device **30** and the carrier device **40.** As shown in FIG. **4**, a plurality of workpieces **5** are accommodated in the carrier device **40.** The carrier device **40** is a device for selecting one of workpieces **5** accommodated therein, and carrying the selected workpiece **5** to the machining device **30.** The carrier device **40** is formed in a box shape. Herein, the carrier device **40** includes a case body **41**, a door **42**, a stocker **43** and a carrier **44** (see FIG. **5**).

As shown in FIG. **4**, the case body **41** is formed in a box shape and has a space inside. The space inside the case body **41** is a space for accommodating the stocker **43** that accommodates a plurality of workpieces **5.** An opening **47** is formed on the front side of the case body **41.**

The door **42** is provided on the case body **41** so that it can be opened/closed. The door **42** is supported on the case body **41** so as to be rotatable about the right edge thereof as the axis. As shown in FIG. **2**, the door **42** is provided with a support projection **42a** that extends rightward from the right portion of the door **42**, and the support projection **42a** is supported on the case body **41.** Herein, the door **42** rotates about the support projection **42a** as the axis, thereby opening/closing the opening **47** of the case body **41**, as shown in FIG. **4****.** When the door **42** leaves the opening **47** open, the space inside the case body **41** communicates with the outside.

The stocker **43** accommodates a plurality of workpieces **5** therein. In the present embodiment, the stocker **43** is provided on the door **42.** In the present embodiment, the stocker **43** includes a stocker body **43a** and a plurality of accommodating sections **43b.** The stocker body **43a** has a box shape that is elongated in the up-down direction and has a space therein.

As shown in FIG. **4**, the accommodating sections **43b** each accommodate a workpiece **5** with an adapter **8** (see FIG. **3**) attached thereto. The accommodating sections **43b** are arranged in the space inside the stocker body **43a.** The accommodating sections **43b** are arranged in the up-down direction. Herein, an accommodating section **43b** is a member that has a space therein, and a workpiece **5** with an adapter **8** attached thereto is accommodated in the space therein. For example, the inner surface that defines the space of the accommodating section **43b** is shaped in conformity with the adapter **8.** Each accommodating section **43b** accommodates a workpiece **5.** In the present embodiment, the stocker **43** includes nine accommodating sections **43b** and can accommodate nine workpieces **5** therein. However, there is no particular limitation on the number of the accommodating sections **43b.** There is no particular limitation on the arrangement of the accommodating sections **43b**, and some accommodating sections **43b** may be arranged in the left-right direction, for example.

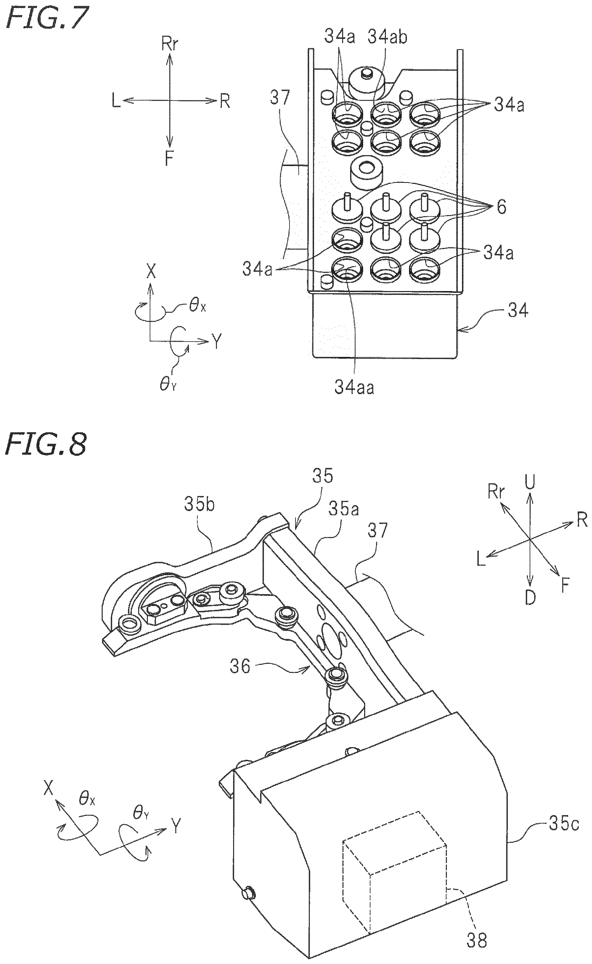

As shown in FIG. **5**, the workpiece **5**, which is accommodated in the accommodating section **43b** of the stocker **43**, is taken out of the stocker **43** by the carrier **44.** The carrier **44** carries the workpiece **5**, which has been taken out, to the machining device **30.** More specifically, the carrier **44** attaches the workpiece **5**, which has been taken out of the accommodating section **43b** of the stocker **43**, to a clamp **36** (see FIG. **8**). Also, the carrier **44** takes the workpiece **5** out of the clamp **36** and carries the workpiece **5** to the carrier device **40.** The carrier **44** accommodates the workpiece **5**, which has been taken out, in the accommodating section **43b** of the stocker **43.** The carrier **44** attaches/detaches the workpiece **5** to/from the accommodating section **43b** of the stocker **43.** The carrier **44** is an example of the carrier mechanism. Although not shown in the figures, the carrier **44** is placed in the space inside the case body **41.** The carrier **44** is controlled by a motor (not shown) and can move in the case body **41** and in a case body **31** of the machining device **30** to be described below. The carrier **44** includes a carrier body **44a**, a first hook **44b**, a second hook **44c**, a first spring **44d** and a second spring **44e.**

The carrier body **44a** is a plate-shaped member. The first hook **44b** and the second hook **44c** are members for pinching the adapter **8** therebetween. The first hook **44b** and the second hook **44c** are arranged so as to oppose each other in the front-rear direction. The first hook **44b** is supported so as to be rotatable about a first shaft **44g** provided on the carrier body **44a** as the axis. The tip portion of the first hook **44b** engages with a first engagement projection **8b** of the adapter **8.** The second hook **44c** is supported so as to be rotatable about a second shaft **44h** provided on the carrier body **44a** as the axis. The tip portion of the second hook **44c** engages with a second engagement projection **8c** of the adapter **8.**

The first spring **44d** gives an elastic force to the first hook **44b.** The first spring **44d** gives an elastic force in such a direction that the tip portion of the first hook **44b** is urged toward the second hook **44c.** The second spring **44e** gives an elastic force to the second hook **44e.** The second spring **44e** gives an elastic force in such a direction that the tip portion of the second hook **44c** is urged toward the first hook **44b.**

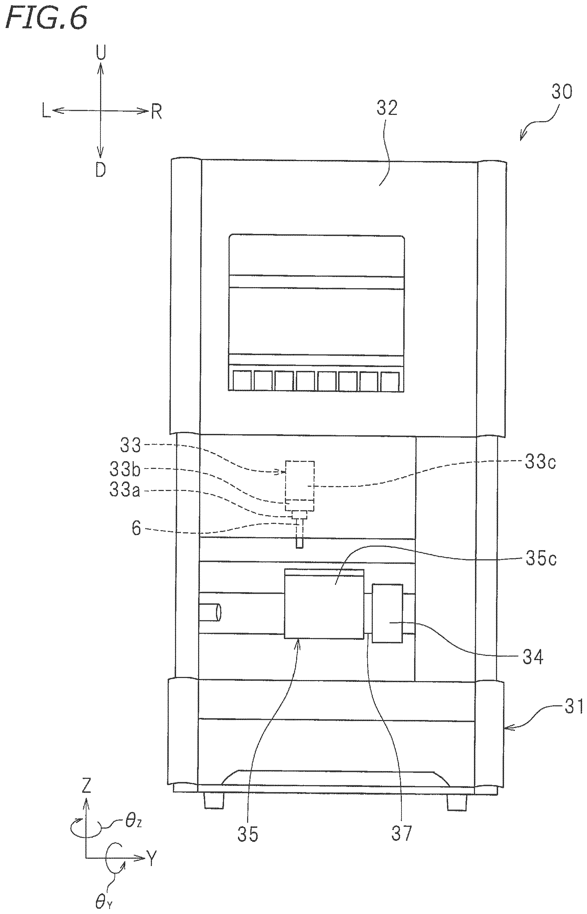

Next, the machining device **30** will be described. The machining device **30** of the first cutting machines **20A** and **20B** machines a workpiece **5** that is carried by the carrier device **40** to produce a dental prosthesis. For example, the machining device **30** of the first cutting machines **20A** and **20B** is formed in a box shape, and a portion thereof communicates with the carrier device **40.** The machining device **30** of the second cutting machines **20C** and **20D** machines a workpiece **5** that is placed by the operator to produce a dental prosthesis. For example, the machining device **30** of the second cutting machines **20C** and **20D** is formed in a box shape. As shown in FIG. **6**, the machining device **30** includes the case body **31** and a cover **32.** The case body **31** is formed in a box shape and has a space inside. The case body **31** has an opening on the front portion. The cover **32** is supported on the case body **31** so that the opening of the case body **31** can be opened/closed.

As shown in FIG. **6**, the machining device **30** includes a spindle **33**, a tool magazine **34** (see also FIG. **7**), a rotation support member **35** (see also FIG. **8**), and the clamp **36** (see FIG. **8**). Note that FIG. **6** shows a state where the cover **32** is open.

The spindle **33** rotates a machining tool **6** (also referred to as a milling bar) to machine the workpiece **5.** The spindle **33** includes a clamp portion **33a**, a rotating portion **33b** and a main body portion **33c.** The main body portion **33c** is formed in a cylindrical shape. The rotating portion **33b** is provided on the lower end of the main body portion **33c.** The rotating portion **33b** rotates relative to the main body portion **33c.** The clamp portion **33a** is provided on the lower end of the rotating portion **33b.** The clamp portion **33a** rotates together with the rotating portion **33b.** The clamp portion **33a** clamps the upper end portion of the machining tool **6.** The machining tools **6** include a tool for cutting the workpiece **5** and a tool for polishing the workpiece **5.**

The rotating portion **33b** rotates the machining tool **6** clamped by the clamp portion **33a.** Herein, a motor (not shown) is connected to the rotating portion **33b.** As the motor is driven, the rotating portion **33b** can rotate in the Z axis rotation direction θ_{Z}. As the rotating portion **33b** rotates, the machining tool **6** clamped by the clamp portion **33a** rotates in the Z axis rotation direction θ_{Z}. The rotating portion **33b** is moved in the left-right direction and the up-down direction by a first driving member (not shown).

As shown in FIG. **7**, the tool magazine **34** can accommodate a plurality of machining tools **6** therein. The tool magazine **34** is formed in a box shape. A plurality of holes **34a** are formed on the upper surface of the tool magazine **34**, each accommodating a machining tool **6.** The hole **34a** is an example of the insertion hole into which the machining tool **6** is inserted. While 15 holes **34a** are formed in the tool magazine **34** of the present embodiment, the number of holes **34a** is not limited thereto. The machining tool **6** is inserted in the hole **34a** with an upper portion thereof exposed. When replacing a machining tool **6**, the machining tool **6** that is being clamped by the clamp portion **33a** is returned to the hole **34a.** Then, the spindle **33** is moved to over another machining tool **6** to be used next, and the upper end of the machining tool **6**, which is located under the clamp portion **33a**, is clamped by the clamp portion **33a.**

As shown in FIG. **6**, the tool magazine **34** is provided with a rotation shaft **37** that rotatably supports the rotation support member **35.** The rotation shaft **37** extends in the left-right direction and is linked to the rotation support member **35.** A second driving member (not shown) is provided on the tool magazine **34.** The rotation shaft **37** can be rotated in the Y axis rotation direction θ_{Y} by second driving member. As the rotation shaft **37** rotates in the Y axis rotation direction θ_{Y}, the rotation support member **35** rotates in the Y axis rotation direction θ_{Y}.

As shown in FIG. **8**, the rotation support member **35** rotatably supports the clamp **36.** The rotation support member **35** is formed in a generally U-Ietter shape as seen from above. The rotation support member **35** includes a first portion **35a** that is linked to the rotation shaft **37** and extends in the front-rear direction, a second portion **35b** extending leftward from the rear end of the first portion **35a**, and a third portion **35c** extending leftward from the front end of the first portion **35a.** The clamp **36** is rotatably supported by the second portion **35b** and the third portion **35c.** The third portion **35c** is provided with a motor **38** for rotating the clamp **36** in the X axis rotation direction θ_{X}.

The clamp **36** is a member for holding the adapter **8.** The clamp **36** is formed in a generally U-letter shape as seen from above. The clamp **36** holds the adapter **8** that is carried by the carrier **44** of the carrier device **40** or the adapter **8** that is attached by the operator. In the present embodiment, the workpiece **5** held by the clamp **36** is machined.

The first cutting machines **20A** and **20B** control the first driving member, the second driving member, the spindle **33** and the carrier **44** based on the job data for a dental prosthesis so as to produce the dental prosthesis. The first cutting machines **20A** and **20B** have the function of automatically replacing machining tools **6** and the function of automatically replacing workpieces **5.** The second cutting machines **20C** and **20D** controls the first driving member, the second driving member and the spindle **33** based on job data for a dental prosthesis so as to produce the dental prosthesis. The second cutting machines **20C** and **20D** have the function of automatically replacing machining tools **6** but does not have the function of automatically replacing workpieces **5.**

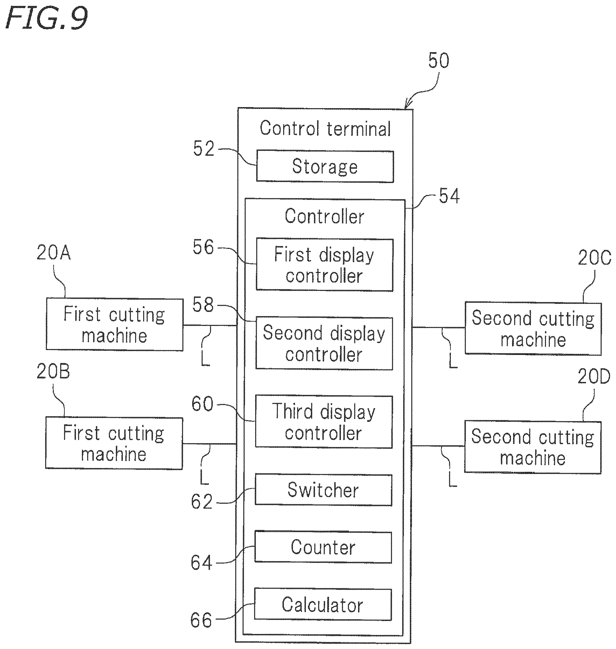

Next, the configuration of the control terminal **50** will be described in detail. The control terminal **50** includes a computer therein. As shown in FIG. **9**, the control terminal **50** includes a storage **52** for storing information, and a controller **54** for executing predetermined processes in accordance with a program. The controller **54** is connected to the first cutting machines **20A** and **20B** and the second cutting machines **20C** and **20D.** The controller **54** transmits job data for dental prostheses to the first cutting machines **20A** and **20B** and the second cutting machines **20C** and **20D.** The controller **54** receives first model information of the first cutting machines **20A** and **20B** is transmitted from the first cutting machines **20A** and **20B**, and second model information of the second cutting machines **20C** and **20D** transmitted from the second cutting machines **20C** and **20D.** The control terminal **50** includes a display device **70** (see FIG. **1**) including a display, and the like, and an input device **71** including a keyboard, a touch panel, a mouse, and the like. The display device **70** can display the first model information of the first cutting machines **20A** and **20B** and the second model information of the second cutting machines **20C** and **20D.**

As shown in FIG. **9**, the controller **54** includes a first display controller **56**, a second display controller **58**, a third display controller **60**, a switcher **62**, a counter **64** and a calculator **66.** These sections may be implemented by software. That is, these sections may be implemented by the controller (computer) **54** to which a computer program is loaded. The computer program may be included in a computer-readable storage medium such as a CD or a DVD. The computer program may be downloaded through the Internet. These sections may be implemented by a processor and/or a circuit of the controller **54.** Note that specifically how these sections are controlled, etc., will be described later.

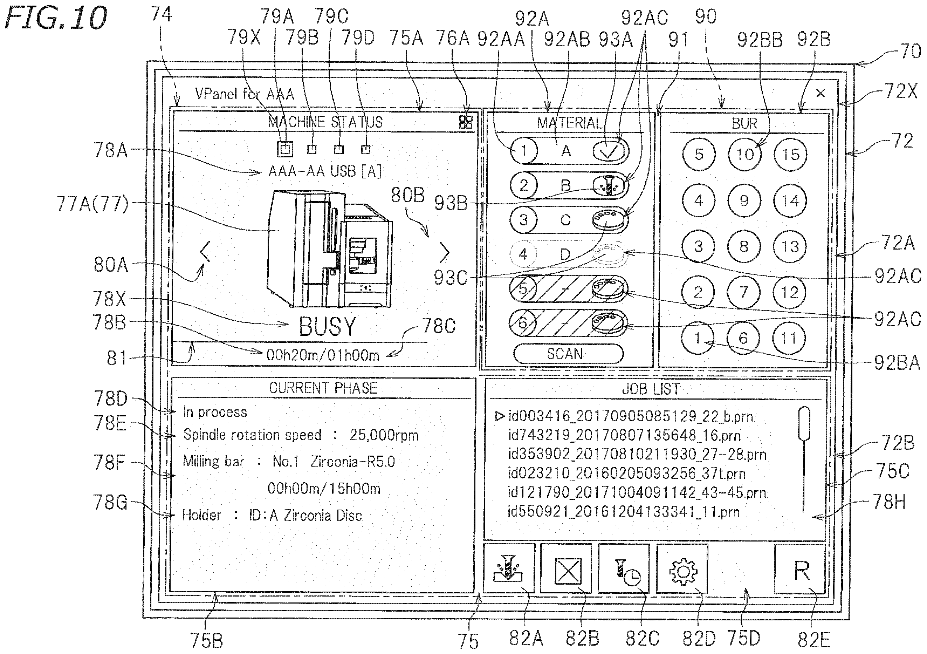

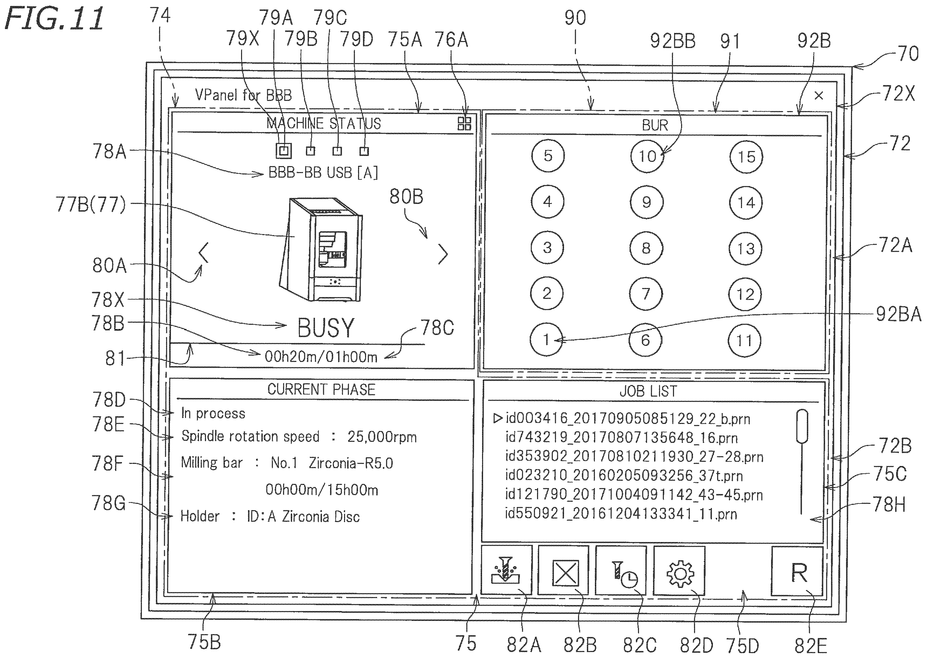

As shown in FIG. **10**, the system **10** can display the first model information of the first cutting machines **20A** and **20B** on the display device **70** of the control terminal **50.** As shown in FIG. **11**, the system **10** can display the second model information of the second cutting machines **20C** and **20D** on the display device **70** of the control terminal **50.** The display device **70** includes a screen **72.** As a predetermined application is executed, a basic screen **72X** is displayed on the screen **72.** The first display controller **56** displays the basic screen **72X** on the display device **70.**

As shown in FIG. **10**, the basic screen **72X** includes a common area **74** and a specific area **90.** The common area **74** includes a left-side portion of an upper section **72A** of the basic screen **72X** and a lower section **72B** of the basic screen **72X.** The specific area **90** includes a right-side portion of the upper section **72A** of the basic screen **72X.** A first screen **75** is displayed in the common area **74.** The first screen **75** shows some of the common items that are common between the first model information of the first cutting machines **20A** and **20B** and the second model information of the second cutting machines **20C** and **20D.** The second display controller **58** displays the first screen **75** in the common area **74.** A second screen **91** is displayed in the specific area **90.** The second screen **91** shows some other ones of the common items that are common between the first model information and the second model information, or shows some other ones of the common items and specific items included in either one of the first model information and the second model information. The third display controller **60** displays the second screen **91** in the specific area **90.** In the example shown in FIG. **10**, the second screen **91** shows some other one of the common items and specific items included in the first model information. In the example shown in FIG. **11**, the second screen shows some other ones of the common items. In the present embodiment, some of the common items that are common between the first model information and the second model information include a machine appearance image **77** to be described later and the model name, etc. Some other ones of the common items that are common between the first model information and the second model information include tool information of the machining tools **6.** The specific items included in the first model information are workpiece information of a plurality of workpieces **5.**

As shown in FIG. **10**, a first section **75A** of the first screen **75** is displayed in the left-side portion of the upper section **72A** of the basic screen **72X** of the common area **74.** The machine appearance image **77** of the cutting machines **20A** to **20D** is displayed in the central portion of the first section **75A.** In the example shown in FIG. **10**, a first machine appearance image **77A** of a cutting machine that includes a machining device and a carrier device is displayed. In the example shown in FIG. **11** a second machine appearance image **77B** of a cutting machine that includes a machining device is displayed.

A column **78A** is provided on top of the machine appearance image **77** in the first section **75A**, where the model name of the cutting machines **20A** to **20D** is displayed. In the example shown in FIG. **10**, the model name of the first cutting machine **20A** is displayed in the column **78A.** In the example shown in FIG. **11**, the model name of the second cutting machine **20C** is displayed in the column **78A.**

Over the column **78A**, there are four icons **79A** to **79D** arranged next to each other. The icon **79A** is embedded with an operation button for displaying the first model information of the first cutting machine **20A** on the basic screen **72X.** The icon **79B** is embedded with an operation button for displaying the first model information of the first cutting machine **20B** on the basic screen **72X.** The icon **79C** is embedded with an operation button for displaying the second model information of the second cutting machine **20C** on the basic screen **72X.** The icon **79D** is embedded with an operation button for displaying the second model information of the second cutting machine **20D** on the basic screen **72X.** The icon of one of the cutting machines **20A** to **20D** that is being currently displayed on the basic screen **72X** is surrounded by a rectangular shape. In the example shown in FIG. **10**, since the first cutting machine **20A** is displayed on the basic screen **72X**, the icon **79A** corresponding to the first cutting machine **20A** is surrounded by a rectangular shape **79X.** The icons **79A** to **79D** can function as the switcher **62.** The switcher **62** switches between displaying the first model information and displaying the second model information on the basic screen **72X.**

Each of the icons **79A** to **79D** is displayed in a different color depending on the operational status of the corresponding one of the cutting machines **20A** to **20D.** For example, gray means that no cutting machine is assigned. Black means that the cutting machine is turned off. Green means that the cutting machine can receive job data. White means that the cutting machine is in operation. Red means that an error has occurred on the cutting machine. Orange means that the cutting machine is on pause. Yellow means that the cover **32** of the cutting machine is open. Blue means that the cutting machine has completed a machining process. Note that the relationship between the operational statuses and the colors is merely an example, and the present invention is not limited to this.

A button **80A** and a button **80B** are provided on the left side and on the right side, respectively, of the machine appearance image **77** in the first section **75A.** The button **80A** has the function of displaying, on the basic screen **72X**, a previous one of the cutting machines **20A** to **20D** to the cutting machine that is being currently displayed on the basic screen **72X.** In the example shown in FIG. **10**, the first cutting machine **20A** is displayed on the basic screen **72X**, and the second cutting machine **20D** will be displayed on the basic screen **72X** by pressing the button **80A.** The button **80B** has the function of displaying, on the basic screen **72X**, a next one of the cutting machines **20A** to **20D** to the cutting machine that is being currently displayed on the basic screen **72X.** In the example shown in FIG. **10**, the first cutting machine **20A** is displayed on the basic screen **72X**, and the second cutting machine **20B** will be displayed on the basic screen **72X** by pressing the button **80B.** The button **80A** and the button **80B** can function as the switcher **62.**

A column **78X** is provided below the machine appearance image **77** in the first section **75A**, where the operational status of the cutting machines **20A** to **20D** is displayed. "BUSY" displayed in the column **78X** indicates that the cutting machine is in operation. "OFFLINE" displayed in the column **78X** indicates that the cutting machine is turned off. "READY" displayed in the column **78X** indicates that the cutting machine can receive job data. "ERROR" displayed in the column **78X** indicates that an error has occurred on the cutting machine. "PAUSE" displayed in the column **78X** indicates that the cutting machine is on pause. "COVER" displayed in the column **78X** indicates that the cover **32** of the cutting machine is open. "FINISH" displayed in the column **78X** indicates that the cutting machine has completed a machining process. Note that the relationship between the operational statuses and the text display is merely an example, and the present invention is not limited to this.

A progress bar **81** is displayed below the column **78X** in the first section **75A.** The progress bar **81** indicates the progress of the machining process.

A column **78B** is provided in the left-side portion under the progress bar **81** in the first section **75A**, where the elapsed time since the start of the machining process is displayed. In the example shown in FIG. **10**, 20 minutes have passed since the start of the machining process on the cutting machine **20A.** A column **78C** is provided in the right-side portion under the progress bar **81** in the first section **75A**, where the estimated process time from start to end of the machining process is displayed. In the example shown in FIG. **10**, the estimated process time on the cutting machine **20A** is 1 hour. The counter **64** counts the elapsed time since the start of the machining process on each of the cutting machines **20A** to **20D.** The calculator **66** calculates the estimated process time based on job data.

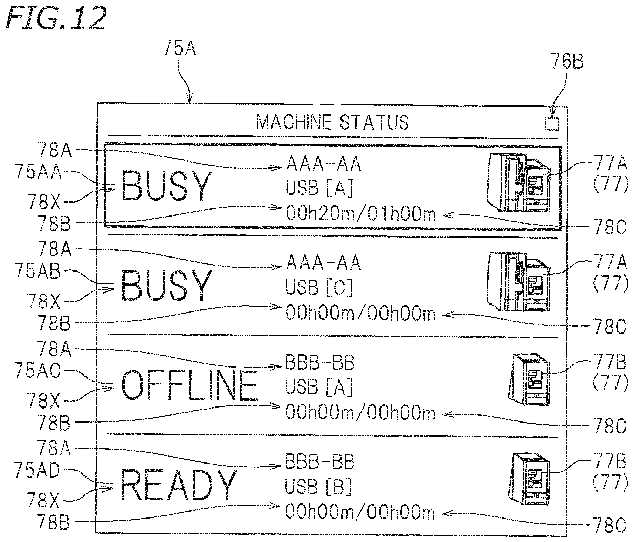

An icon **76A** is placed on the upper right corner of the first section **75A.** The icon **76A** is embedded with an operation button for displaying, in the first section **75A**, a list of cutting machines **20A** to **20D** to be controlled. By selecting the icon **76A** using the input device **71**, the display of the first section **75A** is switched to the display as shown in FIG. **12****.**

In the example shown in FIG. **12**, an icon **76B** is placed on the upper right corner of the first section **75A.** The icon **76B** is embedded with an operation button for displaying, in the first section **75A**, one of the cutting machines **20A** to **20D** that is selected from the list. By selecting the icon **76B** using the input device **71**, the display of the first section **75A** is switched to the display as shown in FIG. **10****.** As shown in FIG. **12**, a first display column **75AA** of the first section **75A** shows a simplified operational status of the first cutting machine **20A.** A second display column **75AB** of the first section **75A** shows a simplified operational status of the second cutting machine **20B.** A third display column **75AC** of the first section **75A** shows a simplified operational status of the third cutting machine **20C.** A fourth display column **75AD** of the first section **75A** shows a simplified operational status of the fourth cutting machine **20D.** By selecting the first display column **75AA** of the first section **75A** using the input device **71**, the first model information of the first cutting machine **20A** is displayed on the basic screen **72X.** By selecting the second display column **75AB** of the first section **75A** using the input device **71**, the first model information of the first cutting machine **20B** is displayed on the basic screen **72X.** By selecting the third display column **75AC** of the first section **75A** using the input device **71**, the second model information of the second cutting machine **20C** is displayed on the basic screen **72X.** By selecting the fourth display column **75AD** of the first section **75A** using the input device **71**, the second model information of the second cutting machine **20D** is displayed on the basic screen **72X.** The first display column **75AA** to the fourth display column **75AD** can function as the switcher **62.**

The columns **78X** are provided in the left-side portion of the first display column **75AA** to the fourth display column **75AD** in the first section **75A**, where the operational statuses of the cutting machines **20A** to **20D** are displayed.

The columns **78A** are provided in the upper central portion of the first display column **75AA** to the fourth display column **75AD** in the first section **75A**, where the model names of the cutting machines **20A** to **20D** are displayed. The column **78B** is provided in the left-side portion of the lower central portion of each of the first display column **75AA** to the fourth display column **75AD** in the first section **75A**, where the elapsed time since the start of the machining process is displayed. The column **78C** is provided in the right-side portion of the lower central portion of each of the first display column **75AA** to the fourth display column **75AD** in the first section **75A**, where the estimated process time from start to end of the machining process is displayed.

The machine appearance images **77** of the cutting machines **20A** to **20D** are displayed on the right side of the first display column **75AA** to the fourth display column **75AD** of the first section **75A.** In the example shown in FIG. **12**, the first machine appearance image **77A** of a cutting machine having a machining device and a carrier device is displayed in the first display column **75AA** and the second display column **75AB.** The second machine appearance image **77B** of a cutting machine having a machining device is displayed in the third display column **75AC** and the fourth display column **75AD.**

As shown in FIG. **10**, a second section **75B** of the first screen **75** is displayed on the left side of the lower section **72B** of the basic screen **72X** of the common area **74.** The second section **75B** includes a column **78D** where the operational status of the cutting machines **20A** to **20D** is displayed, a column **78E** where the rotation speed of the spindle **33** is displayed, a column **78F** where information of the machining tool **6** being currently used is displayed, and a column **78G** where information of the adapter **8** attached to the clamp **36** and the workpiece **5** is displayed.

As shown in FIG. **10**, a third section **75C** of the first screen **75** is displayed on the upper right corner of the lower section **72B** of the basic screen **72X** of the common area **74.** A column **78H** is provided in the third section **75C**, where a list of job data received from the controller **54** is displayed. When a machining process of a workpiece **5** is completed based on job data, the job data is displayed in gray, for example, in the column **78H.** When the workpiece **5** is being machined based on job data, the job data is displayed in blue, for example, in the column **78H.** Before starting a machining process of the workpiece **5** based on job data, the job data is displayed in black, for example, in the column **78H.**

As shown in FIG. **10**, a fourth section **75D** of the first screen **75** is displayed on the lower right corner of the lower section **72B** of the basic screen **72X** of the common area **74.** Five icons **82A** to **82E** are arranged next to each other in the fourth section **75D.** The icon **82A** is embedded with an operation button for starting the machining process on the workpiece **5** based on job data. The icon **82B** is embedded with an operation button for discontinuing the machining process on the workpiece **5.** The icon **82C** is embedded with an operation button for displaying, separately from the basic screen **72X**, a setting screen (not shown) for settings such as registration and selection of the machining tools **6.** The icon **82D** is embedded with an operation button for displaying, separately from the basic screen **72X**, a setting screen for performing various settings of the cutting machines **20A** to **20D.** The icon **82E** is embedded with a link to the webpage of the manufacturer of the cutting machines **20A** to **20D.** Thus, the various items shown on the first screen **75** and described above correspond to some of the common items that are common between the first model information and the second model information.

As shown in FIG. **10**, the third display controller **60** displays the second screen **91** associated with the first cutting machine **20A** in the specific area **90** when the display is switched by the switcher **62** to the first model information. More specifically, on the basic screen **72X** displaying the first cutting machine **20A**, a portion of the second screen **91** showing specific items included in the first model information is displayed on the left side of the specific area **90.** Herein, a column **92A** is provided in the second screen **91**, where workpiece information of workpieces **5** that are accommodated in the stocker **43** are displayed in a list form as specific items. A first area **92AA** where the number of the accommodating section **43b** (example workpiece information) is displayed, a second area **92AB** where the ID of the adapter **8** (example workpiece information) is displayed, and a third area **92AC** where the state of the workpiece **5** (example workpiece information) are provided in the column **92A.** In the example shown in FIG. **10**, since the machining process for the workpiece **5** accommodated in the first accommodating section **43b** has been completed, an icon **93A** that indicates that the machining process has been completed (e.g., an icon of a check mark) is displayed in the third area **92AC.** Since the workpiece **5** accommodated in the second accommodating section **43b** is being machined, an icon **93B** that indicates that the machining process is being performed (e.g., an icon of a machining tool) is displayed in the third area **92AC.** Since the machining processes for the workpieces **5** accommodated in the third and fourth accommodating sections **43b** have not been started, an icon **93C** that indicates that the machining process has not been started (e.g., an icon of a workpiece before being machined) is displayed in the third area **92AC.** Since no workpieces are accommodated in the fifth and sixth accommodating sections **43b**, the areas are entirely grayed out.

As shown in FIG. **10**, the third display controller **60** displays the second screen **91** associated with the first cutting machine **20A** in the specific area **90** when the display is switched by the switcher **62** to the first model information. More specifically, on the basic screen **72X** displaying the first cutting machine **20A**, a portion of the second screen **91** showing some other ones of the common items that are common between the first model information and the second model information are displayed in the right-side portion of the specific area **90.** Herein, a column **92B** is provided in the second screen **91**, where tool information of machining tools **6** that are accommodated in holes **34a** of the tool magazine **34** are displayed. Tool information includes the position of the hole **34a** in the tool magazine **34**, and the information (e.g., the tool number) of the machining tool **6** that is placed (inserted) in the hole **34a.** The column **92B** is displayed so that the positions of the holes **34a** as the tool magazine **34** is seen by the operator from the front side correspond to the machining tools **6** inserted in the holes **34a.** For example, a hole **34aa** of FIG. **7** corresponds to an area **92BA** of FIG. **10**, and a hole **34ab** of FIG. **7** corresponds to an area **92BB** of FIG. **10****.** As shown in FIG. **10**, the column **92B** shows the numbers of machining tools **6** placed in holes **34a** of the tool magazine **34.** When no machining tool **6** is accommodated in the hole **34ab**, the area of the column **92B** corresponding to the hole **34a** is grayed out. In the present embodiment, the second screen **91** that is associated with the first cutting machines **20A** and **20B** includes the column **92A** where a list of workpiece information is displayed, and the column **92B** where a list of tool information of machining tools **6** that are accommodated in the holes **34a** of the tool magazine **34** is displayed.

As shown in FIG. **11**, the third display controller **60** displays the second screen **91** associated with the second cutting machine **20C** in the specific area **90** when the display is switched by the switcher **62** to the second model information. More specifically, the second screen **91** is displayed in the specific area **90** on the basic screen **72X** displaying the second cutting machine **20C**, wherein the second screen **91** shows some other ones of the common items that are common between the first model information and the second model information. The second cutting machine **20C** does not include the carrier device **40**, i.e., does not accommodate a plurality of workpieces **5.** Therefore, specific items (i.e., workpiece information) included in the first model information are not shown in the second screen **91.** That is, only the column **92B** is provided in the second screen **91.** In the present embodiment, the second screen **91** associated with the second cutting machines **20C** and **20D** includes the column **92B** where a list of tool information of machining tools 6 that are accommodated in the holes **34a** of the tool magazine **34** is displayed. Thus, when the display is switched by the switcher **62** to the first model information or to the second model information, the items to be displayed in the specific area **90** change, but the items to be displayed in the common area **74** remain the same.

As described above, with the cutting system **10** of the present embodiment, the switcher **62** switches between displaying the first model information and displaying the second model information on the basic screen **72X** displayed on the display device **70.** Since the model information of the cutting machines **20A** to **20D** can be switched from one to another, it is possible to prevent the display space of the display device **70** from being complicated, as compared with a case where model information of different models are displayed at once. Since information for each of the cutting machines **20A** to **20D** is displayed on the basic screen **72X**, it is possible to prevent a wrong cutting machine from being operated in error. Moreover, the second display controller **58** displays, in the common area **74** of the basic screen **72X** displayed on the display device **70**, the first screen **75** showing some of the common items that are common between the first model information of the first cutting machines **20A** and **20B** and the second model information of the second cutting machines **20C** and **20D.** Thus, information that are common between the cutting machines **20A** to **20D** are displayed in the same common area **74**, thereby reducing the management burden on the operator. Furthermore, the third display controller **60** displays, in the specific area **90** of the basic screen **72X** displayed on the display device **70**, a second screen **91** that is associated with the first cutting machines **20A** and **20B** or a second screen **91** that is associated with the second cutting machines **20C** and **20D.** Thus, since second screens **91** that are each associated with a group of cutting machines **20A** to **20D** are displayed in the specific area **90**, the operator can easily see the second screen **91** displayed in the specific area **90** so as to easily check the characteristic of the cutting machine.

With the cutting system **10** of the present embodiment, common items shown in the second screen **91** are tool information of a plurality of machining tools **6.** The tool information of the machining tools **6** are relatively important for the production of a dental prosthesis. By displaying the tool information of the machining tools **6** in the specific area **90**, where the operator's attention is likely to be drawn, the operator can check tool information of the machining tools **6** as necessary.

With the cutting system **10** of the present embodiment, tool information includes the positions of the holes **34a** in the tool magazine **34**, and the machining tools **6** placed in the holes **34a.** Thus, the operator can easily check which machining tool **6** is placed in which hole **34a** of the tool magazine **34.**

With the cutting system **10** of the present embodiment, the specific items displayed on the second screen **91** relating to the first cutting machines **20A** and **20B** are workpiece information of workpieces **5.** Thus, by displaying workpiece information of a plurality of workpieces **5** in the specific area **90**, the operator can easily see that the cutting machine includes a plurality of workpieces **5** and can easily check the process status of each workpiece **5.**

With the cutting system **10** of the present embodiment, workpiece information includes the first icon **93A** indicating that the machining process of the workpiece **5** has been completed, the second icon **93B** indicating that the machining process of the workpiece **5** is being performed, and the third icon **93C** indicating that the machining process of the workpiece **5** has not been started. Thus, the operator can easily check the current process status of each workpiece **5.**

With the cutting system **10** of the present embodiment, the common item shown on the first screen **75** is the elapsed time since the start of the machining process for the first cutting machines **20A** and **20B** and the second cutting machines **20C** and **20D.** Thus, the operator can easily check the machining time for the first cutting machines **20A** and **20B** and the second cutting machines **20C** and **20D.**

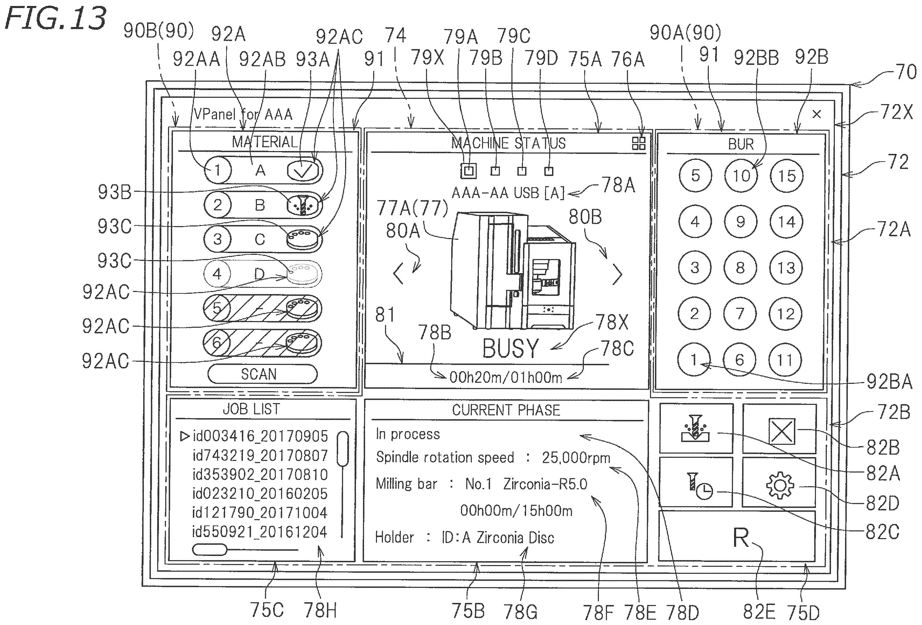

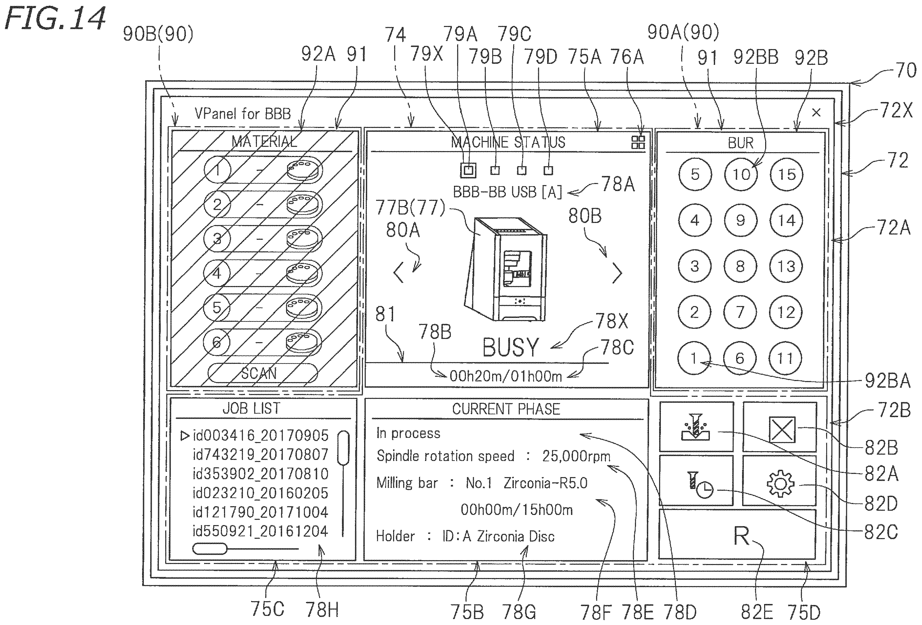

FIG. **13** shows an example of the basic screen **72X** displayed on the display device **70** according to a second embodiment, where the first model information of the first cutting machine **20A** is displayed. FIG. **14** shows an example of the basic screen **72X** displayed on the display device **70** according to the second embodiment, where the second model information of the second cutting machine **20C** is displayed. As shown in FIG. **13** and FIG. **14**, the common area **74** is located in a central portion of the upper section **72A** of the basic screen **72X** and in the lower section **72B** of the basic screen **72X.** The specific area **90** includes a first specific area **90A** that is located on the right side of the upper section **72A** of the basic screen **72X** and a second specific area **90B** that is located on the left side of the upper section **72A** of the basic screen **72X.**

As shown in FIG. **13**, the first section **75A** of the first screen **75** shown in FIG. **10** is displayed in a central portion of the upper section **72A** of the basic screen **72X** of the common area **74.** The third section **75C** of the first screen **75** shown in FIG. **10** is displayed in the left-side portion of the lower section **72B** of the basic screen **72X** of the common area **74.** The second section **75B** of the first screen **75** shown in FIG. **10** is displayed in the central portion of the lower section **72B** of the basic screen **72X** of the common area **74.** The fourth section **75D** of the first screen **75** shown in FIG. **10** is displayed in the right-side portion of the lower section **72B** of the basic screen **72X** of the common area **74.**

As shown in FIG. **13**, on the basic screen **72X** displaying the first cutting machine **20A**, the specific area **90A** displays a portion of the second screen **91** that shows some other ones of the common items that are common between the first model information and the second model information. Herein, the column **92B** is provided in the second screen **91**, where tool information of machining tools **6** that are accommodated in holes **34a** of the tool magazine **34** are displayed.

As shown in FIG. **13**, on the basic screen **72X** displaying the first cutting machine **20A**, the specific area **90B** displays a portion of the second screen **91** that shows specific items included in the first model information. Herein, the column **92A** where workpiece information of workpieces **5** that are accommodated in the stocker **43** are displayed in a list form as specific items is provided in the second screen **91.**

As shown in FIG. **14**, while the second cutting machine **20C** does not have the carrier device **40**, the column **92A** where specific items (i.e., workpiece information) included in the first model information are displayed in a list form is provided in the second screen **91.** Herein, when the display is switched to the second model information, i.e., switched from the basic screen **72X** shown in FIG. **13** to the basic screen **72X** shown in FIG. **14**, the third display controller **60** grays out the workpiece information (specific items).

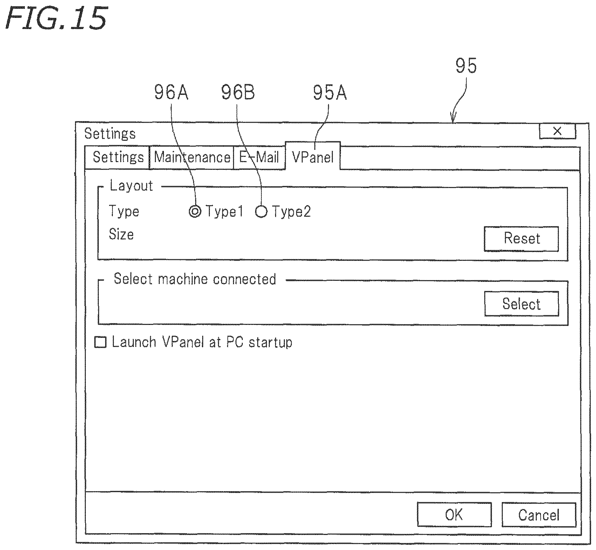

Note that by selecting the icon **82D** using the input device **71**, a setting screen **95** as shown in FIG. **15** is displayed on the screen **72.** When a tab **95A** of the setting screen **95** is selected, radio buttons **96A** and **96B** are displayed that are used for selecting the layout of the basic screen **72X.** The basic screen **72X** as shown in FIG. **10** is displayed by selecting the radio button **96A**, and the basic screen **72X** as shown in FIG. **13** is displayed by selecting the radio button **96B.**

With the cutting system **10** of the present embodiment, when the display is switched to the second model information, the third display controller **60** grays out the workpiece information. When the first cutting machines **20A** and **20B** have the stocker **43** and the second cutting machines **20C** and **20D** do not have the stocker **43**, the second screen **91** displayed in the specific area **90** can be used commonly between the cutting machines **20A** to **20D**, thereby simplifying the configuration of the basic screen **72X.** Herein, since the second cutting machines **20C** and **20D** do not have the stocker **43** and the workpiece information is grayed out, the operator can know that the second cutting machines **20C** and **20D** do not have the stocker **43.**

Preferred embodiments of the present invention have been described above. However, the above embodiments are merely illustrative, and the present invention can be carried out in various other embodiments.

While the basic screen **72X** has two layouts in the embodiments described above, the present invention is not limited to this. There is no particular limitation on the arrangement and the size of the common area **74** and the specific area 90.

While a part of the display is produced commonly between the first cutting machines **20A** and **20B** and the second cutting machines **20C** and **20D** in the embodiments described above, the present invention is not limited to this. A part of the display may be produced commonly between the cutting machines **20A** to **20D** and one or more types of cutting machines that are different from the first cutting machines **20A** and **20B** and the second cutting machines **20C** and **20D.**

### [REFERENCE SIGNS LIST]

- **5**: workpieces
- **10**: cutting system (system)
- **20A-20B**: cutting machine
- **50**: control terminal
- **54**: controller
- **56**: first display controller
- **58**: econd display controller
- **60**: third display controller
- **62**: switcher
- **70**: display device
- **72X**: basic screen
- **74**: common area
- **75**: first screen
- **90**: specific area
- **91**: second screen

## Claims

1. A cutting system (10) comprising:
a first cutting machine (20A,20B) that machines a workpiece (5) to produce a dental prosthesis;
a second cutting machine (20C,20D) that machines a workpiece (5) to produce a dental prosthesis;
a display device (70) that displays first model information of the first cutting machine (20A,20B) and second model information of the second cutting machine (20C,20D); and
a controller (54) that is connected to the first cutting machine (20A,20B) and the second cutting machine (20C,20D) and transmits job data for the dental prosthesis to the first cutting machine (20A,20B) and the second cutting machine (20C,20D),
wherein the controller (54) includes:
a first display controller (56) that displays a basic screen (72X) on the display device (70), the basic screen (72X) including a common area (74) where a first screen (75) showing some of common items that are common between the first model information and the second model information is displayed, and a specific area (90) where a second screen (91) showing some other ones of the common items that are common between the first model information and the second model information or a second screen (91) showing the other ones of the common items and specific items included in one of the first model information and the second model information is displayed;
a second display controller (58) that displays the first screen (75) in the common area;
a switcher (62) that switches between displaying the first model information and displaying the second model information on the basic screen (72X); and
a third display controller (60) that displays the second screen (91) associated with the first cutting machine (20A,20B) in the specific area (90) when display is switched to the first model information, and that displays the second screen (91) associated with the second cutting machine (20C,20D) in the specific area (90) when display is switched to the second model information.

2. The cutting system (10) according to claim 1, wherein:
the first cutting machine (20A,20B) and the second cutting machine (20C,20D) each include a plurality of machining tools (6) that are used to machine the workpiece (5), and a tool magazine (34) that accommodates the machining tools (6) therein; and
the common item shown on the second screen (91) is tool information of the machining tools (6).

3. The cutting system (10) according to claim 2, wherein:
the tool magazine (34) includes a plurality of insertion holes (34a) into which the machining tools (6) are inserted; and
the tool information includes positions of the insertion holes (34a) in the tool magazine (34) and information of the machining tools (6) placed in the insertion holes (34a).

4. The cutting system (10) according to any one of claims 1 to 3, wherein:
the first cutting machine (20A,20B) includes a stocker (43) that accommodates the workpieces (5) therein, and a carrier mechanism (44) that is capable of carrying the workpieces (5) to store and retrieve the workpieces (5) in and from the stocker (43); and
the specific items shown on the second screen (91) are workpiece information of the workpieces (5).

5. The cutting system (10) according to claim 4, wherein the workpiece information includes a first icon (93A) indicating that a machining process of the workpiece (5) has been completed, a second icon (93B) indicating that a machining process of the workpiece (5) is being performed, and a third icon (93C) indicating that a machining process of the workpiece (5) has not been started.

6. The cutting system (10) according to claim 4 or 5, wherein:
the first cutting machine (20A,20B) includes the stocker (43);
the second cutting machine (20C,20D) does not include the stocker (43);
the workpiece information is further shown on the second screen (91) associated with the second cutting machine (20C,20D); and
the third display controller (60) grays out the workpiece information when display is switched to the second model information.

7. The cutting system (10) according to any one of claims 1 to 6, wherein the common item shown on the first screen (75) is elapsed time since a start of a machining process for the first cutting machine (20A,20B) and the second cutting machine (20C,20D).

8. A computer program for a cutting system (10) comprising: a first cutting machine (20A,20B) that machines a workpiece (5) to produce a dental prosthesis; a second cutting machine (20C,20D) that machines a workpiece (5) to produce a dental prosthesis; a display device (70) that displays first model information of the first cutting machine (20A,20B) and second model information of the second cutting machine (20C,20D); and a controller (54) that is connected to the first cutting machine (20A,20B) and the second cutting machine (20C,20D) and transmits job data for the dental prosthesis to the first cutting machine (20A,20B) and the second cutting machine (20C,20D),
the computer program causing the controller (54) to function as:
a first display unit (56) that displays a basic screen (72X) on the display device (70), the basic screen (72X) including a common area where a first screen (75) showing some of common items that are common between the first model information and the second model information is displayed, and a specific area (90) where a second screen (91) showing some other ones of the common items that are common between the first model information and the second model information or a second screen (91) showing the other ones of the common items and specific items included in one of the first model information and the second model information is displayed;
a second display unit (58) that displays the first screen (90) in the common area;
a switching unit (62) that switches between displaying the first model information and displaying the second model information on the basic screen (72X); and
a third display unit (60) that displays the second screen (91) associated with the first cutting machine (20A,20B) in the specific area (90) when display is switched to the first model information, and that displays the second screen (91) associated with the second cutting machine (20C,20D) in the specific area (90) when display is switched to the second model information.

9. A computer-readable storage medium storing the computer program according to claim 8.

10. A method of operatring a cutting system (10) that comprising: a first cutting machine (20A,20B) that machines a workpiece (5) to produce a dental prosthesis; a second cutting machine (20C,20D) that machines a workpiece (5) to produce a dental prosthesis; a display device (70) that displays first model information of the first cutting machine (20A,20B) and second model information of the second cutting machine (20C,20D); and a controller (54) that is connected to the first cutting machine (20A,20B) and the second cutting machine (20C,20D) and transmits job data for the dental prosthesis to the first cutting machine (20A,20B) and the second cutting machine (20C,20D),
the method comprising:
displaying a basic screen (72X) on the display device (70), the basic screen (72X) including a common area where a first screen (75) showing some of common items that are common between the first model information and the second model information is displayed, and a specific area (90) where a second screen (91) showing some other ones of the common items that are common between the first model information and the second model information or a second screen (91) showing the other ones of the common items and specific items included in one of the first model information and the second model information is displayed;
displaying the first screen (90) in the common area;
switching between displaying the first model information and displaying the second model information on the basic screen; and
displaying the second screen (91) associated with the first cutting machine (20A,20B) in the specific area (90) when display is switched to the first model information, and displaying the second screen (91) associated with the second cutting machine (20C,20D) in the specific area (90) when display is switched to the second model information.

## Patentansprüche

1. Schneidsystem (10), mit:
einer ersten Schneidanlage (20A, 20B), die ein Werkstück (5) zur Herstellung einer Zahnprothese bearbeitet;
einer zweiten Schneidanlage (20C, 20D), die ein Werkstück (5) zur Herstellung einer Zahnprothese bearbeitet;
einer Anzeigeeinrichtung (70), die erste Modellinformation der ersten Schneidanlage (20A, 20B) und zweite Modellinformation der zweiten Schneidanlage (20C, 20D) anzeigt; und
einer Steuerung (54), die mit der ersten Schneidanlage (20A, 20B) und der zweiten Schneidanlage (20C, 20D) verbunden ist und Arbeitsdaten für die Zahnprothese an die erste Schneidanlage (20A, 20B) und die zweite Schneidanlage (20C, 20D) sendet,
wobei die Steuerung (54) aufweist:
eine erste Anzeigesteuerung (56), die einen Grundbildschirm (72X) auf der Anzeigeeinrichtung (70) anzeigt, wobei der Grundbildschirm (72X) einen gemeinsamen Bereich (74) enthält, in welchem ein erster Bildschirm (75), der einige gemeinsame Elemente zeigt, die für die erste Modellinformation und die zweite Modellinformation gemeinsam sind, angezeigt wird, und einen speziellen Bereich (90) enthält, in welchem ein zweiter Bildschirm (91), der einige andere der gemeinsamen Elemente zeigt, die gemeinsam für die erste Modellinformation und die zweite Modellinformation sind, oder ein zweiter Bildschirm (91) angezeigt wird, der die anderen der gemeinsamen Elemente und spezielle Elemente zeigt, die in der ersten Modellinformation oder der zweiten Modellinformation enthalten sind;
eine zweite Anzeigesteuerung (58), die den ersten Bildschirm (75) in dem gemeinsamen Bereich anzeigt;
eine Schalteinheit (62), die zwischen dem Anzeigen der ersten Modellinformation und dem Anzeigen der zweiten Modellinformation auf dem Grundbildschirm (72X) umschaltet; und
eine dritte Anzeigesteuerung (60), die den der ersten Schneidanlage (20A, 20B) zugeordneten zweiten Bildschirm (91) in dem speziellen Bereich (90) anzeigt, wenn die Anzeige auf die erste Modellinformation umgeschaltet wird, und die den der zweiten Schneidanlage (20C, 20D) zugeordneten zweiten Bildschirm (91) in dem speziellen Bereich (90) anzeigt, wenn die Anzeige auf die zweite Modellinformation umgeschaltet wird.

2. Schneidsystem (10) nach Anspruch 1, wobei:
die erste Schneidanlage (20A, 20B) und die zweite Schneidanlage (20C, 20D) jeweils mehrere Bearbeitungswerkzeuge (6), die zur Bearbeitung des Werkstücks (5) verwendet werden, und ein Werkzeugmagazin (34) enthalten, das darin die Bearbeitungswerkzeuge (6) aufnimmt; und
das gemeinsame Element, das auf dem zweiten Bildschirm (91) gezeigt wird, Werkzeuginformation der Bearbeitungswerkzeuge (6) ist.

3. Schneidsystem (10) nach Anspruch 2, wobei:
das Werkzeugmagazin (34) mehrere Einführlöcher (34a) aufweist, in die die Bearbeitungswerkzeuge (6) eingeführt werden; und
die Werkzeuginformation Positionen der Einführlöcher (34a) in dem Werkzeugmagazin (34) und Information der Bearbeitungswerkzeuge (6), die in den Einführlöchern (34a) angeordnet sind, enthält.

4. Schneidsystem (10) nach einem der Ansprüche 1 bis 3, wobei:
die erste Schneidanlage (20A, 20B) eine Bevorratungseinheit (43) aufweist, die die Werkstücke (5) darin aufnimmt, und einen Trägermechanismus (44) aufweist, der in der Lage ist, die Werkstücke (5) zum Lagern und Aufnehmen der Werkstücke (5) in und aus der Bevorratungseinheit (43) zu transportieren;
die speziellen Elemente, die auf dem zweiten Bildschirm (91) gezeigt sind, Werkstückinformation der Werkstücke (5) sind.

5. Schneidsystem (10) nach Anspruch 4, wobei die Werkstückinformation beinhaltet: ein erstes Symbol (93A), das anzeigt, dass ein Bearbeitungsvorgang für das Werkstück (5) abgeschlossen ist, ein zweites Symbol (93B), das anzeigt, dass ein Bearbeitungsvorgang des Werkstücks (5) gerade ausgeführt wird, und ein drittes Symbol (93C), das anzeigt, dass ein Bearbeitungsvorgang für das Werkstück (5) noch nicht begonnen worden ist.

6. Schneidsystem (10) nach Anspruch 4 oder 5, wobei
die erste Schneidanlage (20A, 20B) die Bevorratungseinheit (43) enthält;
die zweite Schneidanlage (20C, 20D) die Bevorratungseinheit (43) nicht enthält;
die Werkstückinformation ferner auf dem zweiten Bildschirm (91), der der zweiten Schneidanlage (20C, 20D) zugeordnet ist, gezeigt wird; und
die dritte Anzeigesteuerung (60) die Werkstückinformation ausgraut, wenn die Anzeige auf die zweite Modellinformation geschaltet wird.

7. Schneidsystem (10) nach einem der Ansprüche 1 bis 6, wobei das auf dem ersten Bildschirm (75) gezeigt gemeinsame Element die verstrichene Zeit seit dem Beginn eines Bearbeitungsvorgangs für die erste Schneidanlage (20A, 20B) und die zweite Schneidanlage (20C, 20D) ist.

8. Computerprogramm für ein Schneidsystem (10), das aufweist: eine erste Schneidanlage (20A, 20B), die ein Werkstück (5) zur Herstellung einer Zahnprothese bearbeitet; eine zweite Schneidanlage (20C, 20D), die ein Werkstück (5) zur Herstellung einer Zahnprothese bearbeitet; eine Anzeigeeinrichtung (70), die erste Modellinformation der ersten Schneidanlage (20A, 20B) und zweite Modellinformation der zweiten Schneidanlage (20C, 20D) anzeigt; und eine Steuerung (54), die mit der ersten Schneidanlage (20A, 20B) und der zweiten Schneidanlage (20C, 20D) verbunden ist und Arbeitsdaten für die Zahnprothese an die erste Schneidanlage (20A, 20B) und die zweite Schneidanlage (20C, 20D) sendet,
wobei das Computerprogramm bewirkt, dass die Steuerung (54) fungiert als:
eine erste Anzeigeeinheit (56), die einen Grundbildschirm (72X) auf der Anzeigeeinrichtung (70) anzeigt, wobei der Grundbildschirm (72X) einen gemeinsamen Bereich enthält, in welchem ein erster Bildschirm (75) angezeigt wird, der einige gemeinsame Elemente zeigt, die für die erste Modellinformation und die zweite Modellinformation gemeinsam sind, und einen speziellen Bereich (90) enthält, in welchem ein zweiter Bildschirm (91) angezeigt wird, der einige andere der gemeinsamen Elemente zeigt, die für die erste Modellinformation und die zweite Modellinformation gemeinsam sind, oder in welchem ein zweiter Bildschirm (91) angezeigt wird, der die anderen der gemeinsamen Elemente und spezielle Elemente zeigt, die in der ersten Modellinformation oder der zweiten Modellinformation enthalten sind;
eine zweite Anzeigeeinheit (58), die den ersten Bildschirm (90) in dem gemeinsamen Bereich anzeigt;
eine Schalteinheit (62), die zwischen dem Anzeigen der ersten Modellinformation und dem Anzeigen der zweiten Modellinformation auf dem Grundbildschirm (72X) umschaltet; und
eine dritte Anzeigeeinheit (60), die den zweiten Bildschirm (91), der der ersten Schneidanlage (20A, 20B) zugeordnet ist, in dem speziellen Bereich (90) anzeigt, wenn die Anzeige auf die erste Modellinformation umgeschaltet wird, und die den zweiten Bildschirm (91), der zweiten Schneidanlage (20C, 20D) zugeordnet ist, in dem speziellen Bereich (90) anzeigt, wenn die Anzeige auf die zweite Modellinformation umgeschaltet wird.

9. Computerlesbares Speichermedium, das ein Computerprogramm nach Anspruch 8 speichert.

10. Verfahren zum Betreiben eines Schneidsystems (10), das aufweist: eine erste Schneidanlage (20A, 20B), die ein Werkstück (5) zur Herstellung einer Zahnprothese bearbeitet; eine zweite Schneidanlage (20C, 20D), die ein Werkstück (5) zur Herstellung einer Zahnprothese bearbeitet; eine Anzeigeeinrichtung (70), die erste Modellinformation der ersten Schneidanlage (20A, 20B) und zweite Modellinformation der zweiten Schneidanlage (20C, 20D) anzeigt; und eine Steuerung (54), die mit der ersten Schneidanlage (20A, 20B) und der zweiten Schneidanlage (20C, 20D) verbunden ist, und Arbeitsdaten für die Zahnprothese an die erste Schneidanlage (20A, 20B) und die zweite Schneidanlage (20C, 20D) sendet,
wobei das Verfahren umfasst:
Anzeigen eines Grundbildschirms (72X) auf der Anzeigeeinrichtung (70), wobei der Grundbildschirm (72X) einen gemeinsamen Bereich enthält, in welchem ein erster Bildschirm (75) angezeigt wird, de einige gemeinsame Elemente zeigt, die für die erste Modellinformation und die zweite Modellinformation gemeinsam sind, und einen speziellen Bereich (90) enthält, in welchem ein zweiter Bildschirm (91), der einige andere der gemeinsamen Elemente zeigt, die gemeinsam für die erste Modellinformation und die zweite Modellinformation sind, oder einen zweiten Bildschirm (91) anzeigt, der die anderen der gemeinsamen Elemente und spezielle Elemente zeigt, die in der ersten Modellinformation oder der zweiten Modellinformation enthalten sind;
Anzeigen des ersten Bildschirms (90) in dem gemeinsamen Bereich;
Umschalten zwischen dem Anzeigen der ersten Modellinformation und dem Anzeigen der zweiten Modellinformation auf dem Grundbildschirm; und
Anzeigen des zweiten Bildschirms (91), der mit der ersten Schneidanlage (20A, 20B) zugeordnet ist, in dem speziellen Bereich (90), wenn die Anzeige auf die erste Modellinformation umgeschaltet wird, und Anzeigen des zweiten Bildschirms (91), der der zweiten Schneidanlage (20C, 20D) zugeordnet ist, in dem speziellen Bereich (90), wenn die Anzeige auf die zweite Modellinformation umgeschaltet wird.

## Revendications

1. Système de découpe (10) comprenant :
une première machine de découpe (20A, 20B) qui usine une pièce à usiner (5) pour produire une prothèse dentaire ;
une seconde machine de découpe (20C, 20D) qui usine une pièce à usiner (5) pour produire une prothèse dentaire ;
un dispositif d'affichage (70) qui affiche des premières informations de modèle de la première machine de découpe (20A, 20B) et des secondes informations de modèle de la seconde machine de découpe (20C, 20D) ; et
un dispositif de commande (54) qui est connecté à la première machine de découpe (20A, 20B) et à la seconde machine de découpe (20C, 20D) et transmet des données de travail pour la prothèse dentaire à la première machine de découpe (20A, 20B) et à la seconde machine de découpe (20C, 20D),
dans lequel le dispositif de commande (54) comprend :
un premier dispositif de commande d'affichage (56) qui affiche un écran de base (72X) sur le dispositif d'affichage (70), l'écran de base (72X) comprenant une zone commune (74) où un premier écran (75) montrant certains des éléments communs qui sont communs entre les premières informations de modèle et les secondes informations de modèle est affiché, et une zone spécifique (90) où un second écran (91) montrant certains autres des éléments communs qui sont communs entre les premières informations de modèle et les secondes informations de modèle ou un second écran (91) montrant les autres des éléments communs et des éléments spécifiques inclus dans l'une des premières informations de modèle et des secondes informations de modèle est affiché ;
un deuxième dispositif de commande d'affichage (58) qui affiche le premier écran (75) dans la zone commune ;
un commutateur (62) qui commute entre l'affichage des premières informations de modèle et l'affichage des secondes informations de modèle sur l'écran de base (72X) ; et
un troisième dispositif de commande d'affichage (60) qui affiche le second écran (91) associé à la première machine de découpe (20A, 20B) dans la zone spécifique (90) lorsque l'affichage est commuté vers les premières informations de modèle, et qui affiche le second écran (91) associé à la seconde machine de découpe (20C, 20D) dans la zone spécifique (90) lorsque l'affichage est commuté vers les secondes informations de modèle.

2. Système de découpe (10) selon la revendication 1, dans lequel :
la première machine de découpe (20A, 20B) et la seconde machine de découpe (20C, 20D) comprennent chacune une pluralité d'outils d'usinage (6) qui sont utilisés pour usiner la pièce à usiner (5), et un magasin d'outils (34) qui accueille les outils d'usinage (6) à l'intérieur ; et
l'élément commun montré sur le second écran (91) constitue des informations d'outil des outils d'usinage (6).

3. Système de découpe (10) selon la revendication 2, dans lequel :
le magasin d'outils (34) comprend une pluralité de trous d'insertion (34a) dans lesquels les outils d'usinage (6) sont insérés ; et
les informations d'outil comprennent des positions des trous d'insertion (34a) dans le magasin d'outils (34) et des informations des outils d'usinage (6) placés dans les trous d'insertion (34a).

4. Système de découpe (10) selon l'une quelconque des revendications 1 à 3, dans lequel :
la première machine de découpe (20A, 20B) comprend un dispositif de stockage (43) qui accueille les pièces à usiner (5) à l'intérieur, et un mécanisme de transport (44) qui est capable de transporter les pièces à usiner (5) pour stocker et récupérer les pièces à usiner (5) dans et depuis le dispositif de stockage (43) ; et
les éléments spécifiques montrés sur le second écran (91) sont des informations de pièce à usiner sur les pièces à usiner (5).

5. Système de découpe (10) selon la revendication 4, dans lequel les informations de pièce à usiner comprennent une première icône (93A) indiquant qu'un processus d'usinage de la pièce à usiner (5) a été achevé, une deuxième icône (93B) indiquant qu'un processus d'usinage de la pièce à usiner (5) est en cours d'exécution, et une troisième icône (93C) indiquant qu'un processus d'usinage de la pièce à usiner (5) n'a pas été démarré.

6. Système de découpe (10) selon la revendication 4 ou 5, dans lequel :
la première machine de découpe (20A, 20B) comprend le dispositif de stockage (43) ;
la seconde machine de découpe (20C, 20D) ne comprend pas le dispositif de stockage (43) ;
les informations de pièce à usiner sont en outre affichées sur le second écran (91) associé à la seconde machine de découpe (20C, 20D) ; et
le troisième dispositif de commande d'affichage (60) grise les informations de pièce à usiner lorsque l'affichage est commuté vers les secondes informations de modèle.

7. Système de découpe (10) selon l'une quelconque des revendications 1 à 6, dans lequel l'élément commun représenté sur le premier écran (75) est un temps écoulé depuis un début d'un processus d'usinage pour la première machine de découpe (20A, 20B) et la seconde machine de découpe (20C, 20D).

8. Programme informatique pour un système de découpe (10) comprenant: une première machine de découpe (20A, 20B) qui usine une pièce à usiner (5) pour produire une prothèse dentaire ; une seconde machine de découpe (20C, 20D) qui usine une pièce à usiner (5) pour produire une prothèse dentaire ; un dispositif d'affichage (70) qui affiche des premières informations de modèle de la première machine de découpe (20A, 20B) et des secondes informations de modèle de la seconde machine de découpe (20C, 20D) ; et un dispositif de commande (54) qui est connecté à la première machine de découpe (20A, 20B) et à la seconde machine de découpe (20C, 20D) et transmet des données de travail pour la prothèse dentaire à la première machine de découpe (20A, 20B) et à la seconde machine de découpe (20C, 20D),
le programme informatique amenant le dispositif de commande (54) à fonctionner comme :
une première unité d'affichage (56) qui affiche un écran de base (72X) sur le dispositif d'affichage (70), l'écran de base (72X) comprenant une zone commune (74) où un premier écran (75) montrant certains des éléments communs qui sont communs entre les premières informations de modèle et les secondes informations de modèle est affiché, et une zone spécifique (90) où un second écran (91) montrant certains autres des éléments communs qui sont communs entre les premières informations de modèle et les secondes informations de modèle ou un second écran (91) montrant les autres des éléments communs et des éléments spécifiques inclus dans l'une des premières informations de modèle et des secondes informations de modèle est affiché ;
une deuxième unité d'affichage (58) qui affiche le premier écran (90) dans la zone commune ;
une unité de commutation (62) qui commute entre l'affichage des premières informations de modèle et l'affichage des secondes informations de modèle sur l'écran de base (72X) ; et
une troisième unité d'affichage (60) qui affiche le second écran (91) associé à la première machine de découpe (20A, 20B) dans la zone spécifique (90) lorsque l'affichage est commuté vers les premières informations de modèle, et qui affiche le second écran (91) associé à la seconde machine de découpe (20C, 20D) dans la zone spécifique (90) lorsque l'affichage est commuté vers les secondes informations de modèle.

9. Support de stockage lisible par ordinateur stockant le programme informatique selon la revendication 8.

10. Procédé de fonctionnement d'un système de découpe (10) comprenant: une première machine de découpe (20A, 20B) qui usine une pièce à usiner (5) pour produire une prothèse dentaire ; une seconde machine de découpe (20C, 20D) qui usine une pièce à usiner (5) pour produire une prothèse dentaire ; un dispositif d'affichage (70) qui affiche des premières informations de modèle de la première machine de découpe (20A, 20B) et des secondes informations de modèle de la seconde machine de découpe (20C, 20D) ; et un dispositif de commande (54) qui est connecté à la première machine de découpe (20A, 20B) et à la seconde machine de découpe (20C, 20D) et transmet des données de travail pour la prothèse dentaire à la première machine de découpe (20A, 20B) et à la seconde machine de découpe (20C, 20D),
le procédé comprenant les étapes consistant à :
afficher un écran de base (72X) sur le dispositif d'affichage (70), l'écran de base (72X) comprenant une zone commune où un premier écran (75) montrant certains des éléments communs qui sont communs entre les premières informations de modèle et les secondes informations de modèle est affiché, et une zone spécifique (90) dans laquelle un second écran (91) montrant certains autres des éléments communs qui sont communs entre les premières informations de modèle et les secondes informations de modèle ou un second écran (91) montrant les certains autres des éléments communs et des éléments spécifiques inclus dans l'une des premières informations de modèle et des secondes informations de modèle est affiché ;
afficher le premier écran (90) dans la zone commune ;
commuter entre l'affichage des premières informations de modèle et l'affichage des secondes informations de modèle sur l'écran de base ; et
afficher le second écran (91) associé à la première machine de découpe (20A, 20B) dans la zone spécifique (90) lorsque l'affichage est commuté vers les premières informations de modèle, et afficher le second écran (91) associé à la seconde machine de découpe (20C, 20D) dans la zone spécifique (90) lorsque l'affichage est commuté vers les secondes informations de modèle.
